# EUROPÄISCHE PATENTSCHRIFT

(11) **EP 3 121 574 B1**
(45) Veröffentlichungstag und Bekanntmachung des Hinweises auf die Patenterteilung: **09.05.2018**
(21) Anmeldenummer: 16171023.1
(22) Anmeldetag: 24.05.2016
(51) Int. Cl.: G01L 5/04, G01L 5/10, B21B 38/00, B21B 38/06, B21B 3/00

(54) **MESSROLLE ZUR MESSUNG DER BANDZUGSPANNUNG**
MEASURING ROLLER FOR MEASURING TENSION
ROULEAU DE MESURE DESTINE A MESURER LA TENSION DE TRACTION D'UNE BANDE

(30) Priorität: 21.07.2015 DE 202015005099 U
(43) Veröffentlichungstag der Anmeldung: 25.01.2017
(73) Patentinhaber: Achenbach Buschhütten GmbH & Co. KG, 57223 Kreuztal (DE)
(72) Erfinder: Barten, Axel, 57223 Kreuztal (DE); Neukant, Rainer, 57223 Kreuztal (DE); Kasper, Philipp, 57072 Siegen (DE)
(74) Vertreter: advotec.

(56) Entgegenhaltungen:
- EP-A1- 0 595 072
- EP-A1- 1 566 227
- WO-A1-2004/065924
- DE-C1- 10 202 413
- DE-U1- 9 418 351

## Beschreibung

Die Erfindung betrifft eine Messrolle zur Messung der Bandzugspannung gemäß dem Oberbegriff des Anspruchs 1.

Messrollen der eingangs genannten Art werden insbesondere zur Messung der Bandzugspannung in einem Bandmaterial verwendet, das zur Herstellung von Folien, wie insbesondere Aluminiumfolien, dient.

Aus der DE 10 2006 003 792 A1 ist eine Messrolle bekannt, die eine als Vollwelle ausgebildete Welle aufweist, die mit axialen, sich parallel und benachbart zur Wellenoberfläche erstreckenden Aufnahmebohrungen versehen ist, die zur Aufnahme einer Sensoranordnung dienen. Die Sensoranordnung umfasst einen Sensor, der zwischen Stützkörperpaarungen angeordnet ist, die jeweils zwei Stützkörper mit einander benachbarten Keilflächen aufweisen, die zur Einstellung einer auf den Sensor wirkenden Vorspannung gegeneinander verkeilt sind.

Die kraftschlüssige Positionierung der bekannten Sensoranordnungen in einer axialen, also sich über die gesamte Breite der Welle erstreckenden Bohrung durch die Verkeilung der Stützkörper gegeneinander erfordert einen entsprechend hohen Aufwand zur definierten Positionierung der Sensoranordnung bezogen auf die Breite der Messrolle. Insbesondere erweist sich die Reproduzierbarkeit einer Positionierung nach Austausch einer Sensoranordnung als überaus schwierig. Darüber hinaus erfordert die Anordnung der Sensoren zwischen den aus Keilelementen gebildeten Stützkörperanordnungen einen entsprechend großen Bohrungsdurchmesser, sodass zur Ausbildung der Messrolle die Verwendung einer Vollwelle mit entsprechend großer Masse erforderlich wird.

Aus der WO 2004/065924 A1 ist eine Walze bekannt, bei der in einer sich axial in einer Hohlwelle erstreckenden Aussparung eine Sensoranordnung mit einer Reihenanordnung von Sensoren angeordnet ist, die auf einem gemeinsamen Stützkörper angeordnet sind, derart, dass die Sensoren mit ihren axialen Enden zwischen den Vorspanneinrichtungen und dem Stützkörper angeordnet sind. Zur Montage der bekannten Sensoranordnung wird diese mit dem Stützkörper in die axial ausgerichtete Sensoraufnahme eingeführt.

Die DE 94 18 351 U1 zeigt eine Messrolle, bei der in einer am äußeren Wellenumfang einer Hohlwelle angeordneten Aufnahmebohrung eine Sensoranordnung aufgenommen ist, wobei die Sensoranordnung einen Sensor und eine Vorspanneinrichtung umfasst und der Sensor zwischen einem Boden der Aufnahmebohrung und der Vorspanneinrichtung angeordnet ist.

Aus der EP 0 595 072 A1 ist eine Messrolle bekannt, die in einer am äußeren Wellenumfang einer Welle angeordneten radialen Aufnahmebohrung eine eine Vorspanneinrichtung und einen Sensor aufweisende Sensoranordnung zeigt, wobei der Sensor zwischen der Vorspanneinrichtung und einem Boden der Aufnahmebohrung aufgenommen ist.

Aus der EP 1 566 227 A1 ist eine Messrolle bekannt, die am äußeren Wellenumfang einer als Hohlwelle ausgebildeten Welle eine radiale Aufnahmebohrung zur Aufnahme einer Sensoranordnung aufweist. Die Sensoranordnung umfasst einen Sensor und eine Vorspanneinrichtung, wobei der Sensor zwischen der Vorspanneinrichtung und einem Boden der Aufnahmebohrung angeordnet ist.

Der vorliegenden Erfindung liegt die Aufgabe zugrunde, eine Messrolle vorzuschlagen, die eine exakte axiale Positionierung der Sensoranordnungen ermöglicht und sich darüber hinaus durch eine möglichst geringe Masse auszeichnet.

Zur Lösung dieser Aufgabe weist die erfindungsgemäße Messrolle die Merkmale des Anspruchs 1 auf.

Die erfindungsgemäße Ausgestaltung der Messrolle ermöglicht zum einen durch die Anordnung des Sensors in einer radialen als Durchgangsbohrung ausgeführten Aufnahmebohrung eine exakte Definition der axialen Position des Sensors in der Hohlwelle. Darüber hinaus ermöglicht die Anordnung des Sensors zwischen einem im äußeren Wellenumfang angeordneten Kontaktboden der Aufnahmebohrung und dem Stützkörper eine insgesamt platzsparende Ausgestaltung der Sensoranordnung, sodass diese in einem Wellenmantel untergebracht werden kann, ohne dass die Notwendigkeit der Verwendung einer Vollwelle zur Ausbildung der Messrolle besteht.

Gemäß einer besonders vorteilhaften Ausführungsform ist der Stützkörper längsverschiebbar in der Aufnahmebohrung aufgenommen, und die Vorspanneinrichtung ist als eine auf den Stützkörper wirkende und unabhängig vom Stützkörper ausgebildete Stelleinrichtung zur axialen Verschiebung des Stützkörpers in der Aufnahmebohrung ausgebildet. Hierdurch wird insbesondere bei Verwendung eines sogenannten "starren" Kraftsensors, der keine integrierte Federvorspanneinrichtung aufweist, eine exakt reproduzierbare Einstellung der Vorspannung des Sensors möglich.

Wenn die Aufnahmebohrung zur Ausbildung der Vorspanneinrichtung ein Innengewinde und ein mit einem Außengewinde versehenes und auf den Stützkörper wirkendes Vorspannelement aufweist, ist darüber hinaus die Vorspanneinrichtung besonders platzsparend realisierbar.

Um zu verhindern, dass aufgrund von Reibungseffekten bei eine Drehung des Vorspannelements zur axialen Verschiebung des Stützkörpers die Drehung auf den Stützkörper übertragen wird, ist es vorteilhaft, wenn der Stützkörper mit einer Verdrehsicherung versehen ist, die sicherstellt, dass der Stützkörper lediglich eine axiale Bewegung in der Aufnahmebohrung ausführen kann.

Besonders vorteilhaft ist es, wenn eine zur Führung eines Führungszapfens des Stützkörpers in einer Bohrungswand der Aufnahmebohrung ausgebildete Führungsnut gleichzeitig zur Durchführung eines Anschlusskabels des Sensors dient, sodass auch ohne weiteres Ausführungen von Sensoren bei der Sensoranordnung eingesetzt werden können, die nicht mit einem zentral vom Boden des Sensors abgehenden Anschlusskabel, sondern mit einem seitlich und radial vom Sensor abgehenden Anschlusskabel versehen sind.

Als vorteilhaft erweist es sich auch, wenn der Stützkörper mit einer Zugentlastung für das Anschlusskabel des Sensors versehen ist, die insbesondere durch einen an einer Umfangswandung des Stützkörpers angeordneten formelastischen Ring gebildet sein kann, der das Anschlusskabel gegen die Umfangswand des Stützkörpers klemmt.

Bei der Verwendung von Sensoren, die mit einer integrierten Federvorspanneinrichtung versehen sind, also Sensoren, die zur Einstellung einer Mindestvorspannkraft durch axiale Verschiebung gegen die Wirkung der integrierten Federvorspanneinrichtung eingestellt werden müssen, also insbesondere solche Sensoren, die beispielsweise mit einem federnden Kugelkopf versehen sind, ist es vorteilhaft, wenn der Stützkörper längsverschiebbar in der Aufnahmebohrung aufgenommen ist, und der Stützkörper eine Komponente der Vorspanneinrichtung bildet, die formschlüssig in der Aufnahmebohrung aufgenommen ist.

Bei Sensoren, die zur Überführung in einen betriebsbereiten Ausgangszustand, wie der vorstehend erwähnte, mit einem federnd abgestützen Kugelkopf versehende Sensor nicht mit einer äußeren Vorspannkraft, sonders vielmehr mit einem Vorspannweg beaufschlagt werden müssen, ist es vorteilhaft, wenn der Stützkörper zur Ausbildung der Vorspanneinrichtung als ein in die Aufnahmebohrung eingreifenden Eingriffskörper mit radialen Verriegelungsfortsätzen ausgebildet ist, die zur Ausbildung eines Bajonettverschlusses in Verriegelungsnuten eingreifen, welche in der Bohrungswand der Aufnahmebohrung ausgebildet sind.

Besonders vorteilhaft ist es, wenn der Stützkörper integral mit dem Sensor ausgebildet ist, sodass eine besonders kompakte Ausgestaltung ermöglicht wird.

In einer weiteren Ausführungsform, die besonders zur Verwendung von mit einem Vorspannweg beaufschlagten Sensoren geeignet ist, kann der Stützkörper zur Ausbildung der Vorspanneinrichtung als ein in die Aufnahmebohrung eingreifender Eingriffskörper mit axial sich erstreckenden, elastischen Verriegelungsschenkeln ausgebildet sein, die zur Ausbildung einer Rastverbindung mit in der Bohrungswand der Aufnahmebohrung ausgebildeten Rastaufnahmen zusammenwirken.

In einer besonders einfachen Ausführungsform der Messrolle ist zur Ausbildung des in der Aufnahmebohrung angeordneten Kantaktbodens die Aufnahmebohrung als Sacklochbohrung ausgeführt, sodass der Bohrungsgrund den Kontaktboden ausbildet.

Abweichend hiervon kann zur Ausbildung des in der Aufnahmebohrung angeordneten Kontaktbodens am radial äußeren Bohrungsende ein von der Hohlwelle unabhängig ausgebildetes Bodenelement angeordnet sein, so dass das Bodenelement in besonderer Weise auf den Sensor oder die Sensorumgebung abgestimmt werden kann.

Besonders vorteilhaft ist es, wenn das Bodenelement als Ausgleichselement ausgebildet ist, mit einem vom Material der Hohlwelle abweichenden Temperaturausdehnungskoeffizienten, um beispielsweise Temperaturausdehnungen im Wellenmantel der Hohlwelle zu kompensieren.

Nachfolgend werden bevorzugte Ausführungsformen der Erfindung anhand der Zeichnungen näher erläutert.

Es zeigen:
- **Fig. 1**: einen Querschnitt durch eine Messrolle mit einer in einem Wellenmantel ausgebildeten Aufnahmebohrung zur Aufnahme einer in **Fig. 3** dargestellten Sensoranordnung;
- **Fig. 2**: eine Schnittdarstellung der in **Fig. 1** dargestellten Messrolle gemäß Schnittlinienverlauf II-II in **Fig. 1** mit einer in die Aufnahmebohrung eingesetzten Sensoranordnung;
- **Fig. 3**: eine Schnittdarstellung der in **Fig. 2** dargestellten Sensoranordnung gemäß Schnittlinienverlauf III-III in **Fig. 2****;**
- **Fig. 4**: eine **Fig. 2** entsprechende Darstellung einer weiteren Ausführungsform einer Sensoranordnung;
- **Fig. 5**: die in **Fig. 4** dargestellte Sensoranordnung in einer Schnittdarstellung gemäß Schnittlinienverlauf IV-IV in **Fig. 4****;**
- **Fig. 6**: eine weitere Ausführungsform einer Sensoranordnung;
- **Fig. 7**: die in **Fig. 6** dargestellte Sensoranordnung in einer Schnittansicht gemäß Schnittlinienverlauf VII-VII in **Fig. 6****;**
- **Fig. 8**: eine weitere Ausführungsform einer Sensoranordnung;
- **Fig. 9**: die in **Fig. 8** dargestellte Sensoranordnung in einer Schnittansicht gemäß Schnittlinienverlauf IX-IX in **Fig. 8****.**

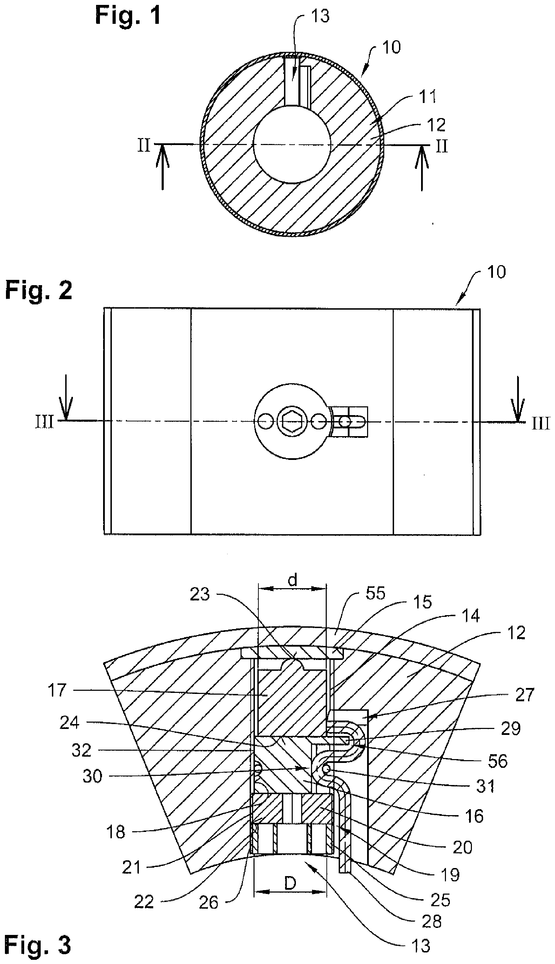

**Fig. 1** zeigt in einer Querschnittsdarstellung eine Messrolle 10, die eine als Hohlwelle 11 ausgebildete Welle umfasst mit einer in einem Wellenmantel 12 angeordneten radialen Aufnahmebohrung 13 zur Aufnahme einer in **Fig. 3** dargestellten Sensoranordnung 14.

Wie aus den **Fig. 1 und 3** ersichtlich, weist die Messrolle 10 auf dem Wellenmantel 12 eine aus einem Verbundwerkstoff gebildete Kontaktschicht 55 auf, die für den unmittelbaren Kontakt mit einer hier nicht näher dargestellten, über die Messrolle 10 geführten Materialbahn bestimmt ist. Die Aufnahmebohrung 13 weist einen am äußeren Wellenumfang angeordneten Kontaktboden 15 auf, der im Fall des in den Fig. 1 und 2 dargestellten Ausführungsbeispiels aus einem von der Hohlwelle unabhängigen Bodenelement in der Aufnahmebohrung 13 gebildet ist.

Wie **Fig. 3** zeigt, umfasst die Sensoranordnung 14 einen zwischen dem hier als Bodenelement ausgebildeten Kontaktboden 15 der Aufnahmebohrung 13 und einem Stützkörper 16 angeordneten Sensor 17, der einen Außendurchmesser d aufweist, der kleiner als ein Bohrungsdurchmesser D der Aufnahmebohrung 13 ist, so dass der Sensor 17 ohne oder mit lediglich geringem Kontakt zu einer Bohrungswand 18 der Aufnahmebohrung 13 axial verschiebbar in der Aufnahmebohrung 13 aufgenommen ist. Dabei ist der Sensor 17 mit seinem unteren axialen Ende 24 auf dem Stützkörper 16 angeordnet, der ebenfalls axial verschiebbar in der Aufnahmebohrung 13 angeordnet ist und mittels einer Vorspanneinrichtung 19, die ein hier als Vorspannscheibe ausgebildetes Vorspannelement 20 aufweist, das über ein Außengewinde 21 mit einem Innengewinde 22 der Aufnahmebohrung 13 zusammenwirkt, axial in der Aufnahmebohrung 13 verstellbar ist.

Wie **Fig. 3** zeigt, ist der Sensor 17 mit seinem oberen, hier durch einen Kugelkopf gebildeten axialen Ende 23 benachbart dem Bodenelement 15 und mit seinem unteren axialen Ende 24 benachbart dem Stützkörper 16 zwischen dem Bodenelement 15 und dem Stützkörper 16 angeordnet, so dass mittels einer geeigneten axialen Zustellung des Vorspannelements 20 über den Stützkörper 16 der Sensor 17 mit einer definierten Vorspannkraft beaufschlagt werden kann.

Zur Sicherung der axialen Position des Vorspannelements 20 ist eine Konterscheibe 25 vorgesehen, die ebenfalls mit einem Außengewinde 26 versehen mit dem Innengewinde 22 der Aufnahmebohrung 13 zusammenwirkt.

Wie ferner der **Fig. 3** zu entnehmen ist, weist die Aufnahmebohrung 13 eine in der Bohrungswand 18 ausgebildete, in Längsrichtung der Aufnahmebohrung 13 verlaufende Führungsnut 27 auf, die zum einen zur Abführung eines seitlich vom Sensor 17 abgehenden Anschlusskabels 28 und zum anderen zur Ausbildung einer Verdrehsicherung 56 für den Stützkörper 16 im Zusammenwirken mit einem am Stützkörper 16 ausgebildeten Führungszapfen 29 dient. Die Verdrehsicherung 56 verhindert, dass bei einer Zustellung des Vorspannelements 20 eine Übertragung der Drehbewegung des Vorspannelements 20 auf den Stützkörper 16 und über diesen auf den Sensor 17 erfolgt.

Wie weiter **Fig. 3** zeigt, ist der Stützkörper 16 mit einer Zugentlastung 30 für das Anschlusskabel 28 versehen, wobei die Zugentlastung 30 einen im vorliegenden Fall als O-Ring ausgebildeten formelastischen Ring 31 umfasst, der derart mit einer Umfangswand 32 des Stützkörpers 16 zusammenwirkt, dass das Anschlusskabel 28 durch den Klemmring 31 gegen die Umfangswand 32 geklemmt wird.

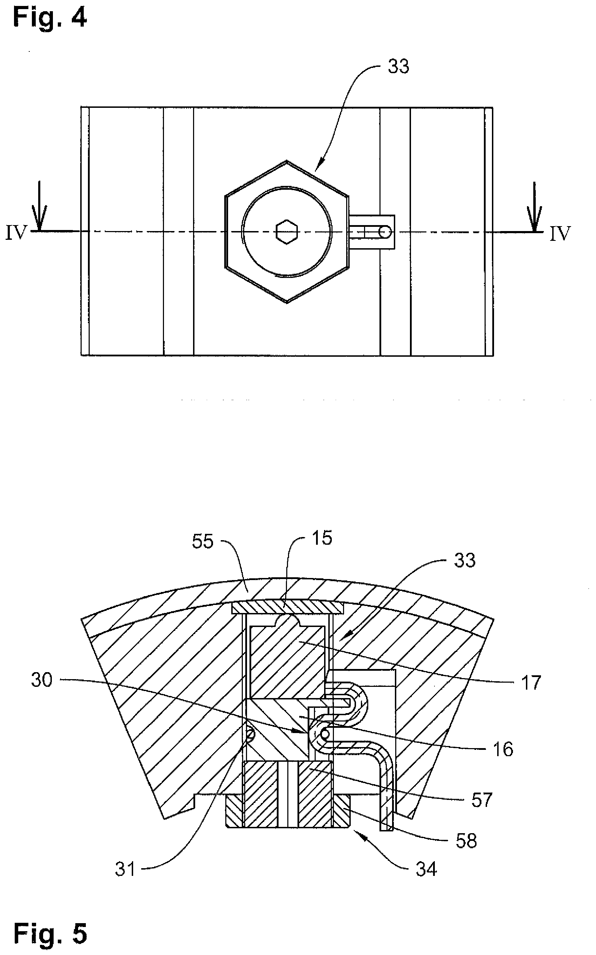

In den **Fig. 4 und 5** ist in einer weiteren Ausführungsform eine Sensoranordnung 33 dargestellt, die abgesehen von einer Vorspanneinrichtung 34, die die in **Fig. 3** dargestellte Vorspanneinrichtung 19 der Sensoranordnung 14 ersetzt, identisch mit der Sensoranordnung 14 ausgebildet ist, so dass bei der Sensoranordnung 33 im übrigen mit der Sensoranordnung 14 überreinstimmende Komponenten und entsprechend übereinstimmende Bezugszeichen verwendet werden.

Zur Ausbildung der Vorspanneinrichtung 34 ist auf einem als Gewindebolzen ausgebildeten Vorspannelement 57 eine Kontermutter 58 zur Sicherung des Vorspannelements 57 in der gewünschten Position vorgesehen.

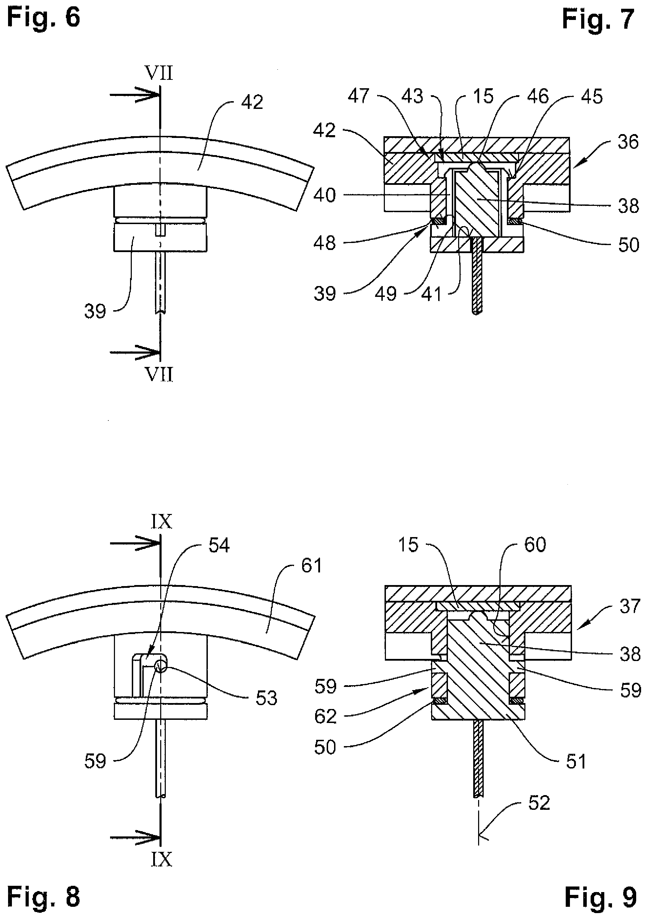

Im Unterschied zu den Sensoranordnungen 14 und 33, bei denen übereinstimmend ein Sensor 17 zum Einsatz kommt, der als starrer Kraftsensor ausgebildet ist, also mit einer durch die Vorspanneinrichtungen 19, 34 erzeugten Vorspannkraft beaufschlagt wird, wird in Sensoranordnungen 36, 37, die in den **Fig. 6 und 7** beziehungsweise **8 und 9** dargestellt sind, jeweils ein Sensor 38 verwendet, der als ein Sensor mit integraler Federvorspannung ausgebildet ist und der zur Erzeugung einer Vorlast mit einem Vorspannweg beaufschlagt wird.

**Fig. 7** zeigt den in einem Stützkörper 39 aufgenommenen Sensor 38, wobei der Sensor 38 in einem zwischen elastischen Verriegelungsschenkeln 40 ausgebildeten Aufnahmeraum des Stützkörpers 39 auf einem Stützkörperboden 41 angeordnet ist. Zwischen den elastischen Verriegelungsschenkeln 40 ist an zwei diametral gegenüberliegenden Seiten des Stützkörpers 39 ein Spalt ausgebildet, der es ermöglicht, dass die Verriegelungsschenkel 40 beim Einführen des Stützkörpers 39 in eine in einem Wellenmantel 42 ausgebildete Aufnahmebohrung 43 radial aufeinander zu bewegt werden, so dass an den freien Enden der Verriegelungsschenkel 40 ausgebildete Rastnasen beim Einführen radial nach innen ausweichen und erst bei Erreichen der gewünschten endgültigen Relativstellung des Stützkörpers 39 in der Aufnahmebohrung 43 in Rastaufnahmen einrasten, die durch einen Bohrungsabsatz 45 der Aufnahmebohrung 43 ausgebildet werden.

Wie bei der in den **Fig. 1 bis 4** dargestellten Sensoranordnung 14 ist auch bei der Sensoranordnung 36 ein radial oberes Ende der Aufnahmebohrung 43 durch einen Kontaktboden 15 ausgebildet. In der in **Fig. 7** dargestellten verrasteten Stellung des Stützkörpers 39 liegt ein Kugelkopf 46 des Sensors 38 am Kontaktboden 15 an. Ein in **Fig. 7** zwischen einem Stützrand 48 der Aufnahmebohrung 43 und einem Anschlagrand 49 des Stützkörpers 39 angeordneter elastisch verformbarer O-Ring 50 bildet ein elastisch federndes Rückstellelement aus. Die Verriegelungsschenkel 40 Stützkörpers 39 bilden bei dem in **Fig. 7** dargestellten Ausführungsbeispiel der Sensoranordnung 36 zusammen mit dem Bohrungsabsatz 45 und dem O-Ring 50 eine Vorspanneinrichtung 47.

Die in den **Fig. 8 und 9** dargestellte Sensoranordnung 37 ist bis auf einen Stützkörper 51, der abweichend von dem Stützkörper 39 der Sensoranordnung 36 ausgebildet ist, identisch mit der Sensoranordnung 36 ausgebildet. Anstelle der elastisch verformbaren Verriegelungsschenkeln 40 des Stützkörpers 39, die mit dem Bohrungsabsatz 45 der Aufnahmebohrung 43 zusammenwirken, weist der Stützkörper 51 der Sensoranordnung 37 radial von einer Sensoraufnahme des Stützkörpers 51 nach außen ragende Verriegelungszapfen 59 auf, die nach Kompression eines hier als O-Ring 50 ausgebildeten elastischen Rückstellelements und Drehung des Stützkörpers 51 um eine Hochachse 52 des Stützkörpers 51 nach Art eines Bajonettverschlusses in Rastvertiefungen 53 einer in einer Aufnahmebohrung 60 eines Wellenmantels 61 ausgebildeten Verriegelungsnut 54 einrasten. Die Verriegelungszapfen 59 des Stützkörpers 51 bilden zusammen mit der Verriegelungsnut 54 und dem O-Ring 50 eine Vorspanneinrichtung 62.

## Patentansprüche

1. Messrolle (10) zur Messung der Bandzugspannung mit einer Hohlwelle mit einer in einem Wellenmantel ausgebildeten radialen Aufnahmebohrung (13, 43, 60) zur Aufnahme zumindest einer Sensoranordnung (14, 33, 36, 37) umfassend einen Sensor (17, 38), und zur Aufnahme eines am äußeren Wellenumfang in der Aufnahmebohrung angeordneten Kontaktbodens (15),
**dadurch gekennzeichnet,**
**dass** die Aufnahmebohrung als Durchgangsbohrung in der Hohlwelle ausgebildet ist und die in der Aufnahmebohrung angeordnete Sensoranordnung zusätzlichzum Sensor einen Stützkörper (16, 39, 51) zur Abstützung des Sensors in der Aufnahmebohrung und eine Vorspanneinrichtung (19, 34, 47, 62) zur kraftschlüssigen Verbindung des Sensors mit der Welle umfasst, derart, dass der Sensor mit seinen axialen Enden (23, 24) zwischen dem Kontaktboden und dem Stützkörper angeordnet ist.

2. Messrolle nach Anspruch 1,
**dadurch gekennzeichnet,**
**dass** der Stützkörper (16) längs verschiebbar in der Aufnahmebohrung (13) aufgenommen ist, und die Vorspanneinrichtung (19, 34) als eine auf den Stützkörper wirkende und unabhängig vom Stützkörper ausgebildete axiale Stelleinrichtung zur axialen Verschiebung des Stützkörpers in der Aufnahmebohrung ausgebildet ist.

3. Messrolle nach Anspruch 2,
**dadurch gekennzeichnet,**
**dass** die Aufnahmebohrung (13) zur Ausbildung der Vorspanneinrichtung (19, 34) ein Innengewinde (22) und ein mit einem Außengewinde (21) versehenes und auf den Stützkörper (16) wirkendes Vorspannelement (20, 57) aufweist.

4. Messrolle nach einem der vorangehenden Ansprüche,
**dadurch gekennzeichnet,**
**dass** der Stützkörper (16) mit einer Verdrehsicherung (56) versehen ist.

5. Messrolle nach Anspruch 4,
**dadurch gekennzeichnet,**
**dass** eine zur Führung eines Führungszapfens (29) des Stützkörpers (16) in einer Bohrungswand (18) der Aufnahmebohrung (13) ausgebildete Führungsnut (27) gleichzeitig zur Durchführung eines Anschlusskabels (28) des Sensors (17) dient.

6. Messrolle nach Anspruch 5,
**dadurch gekennzeichnet,**
**dass** der Stützkörper (16) mit einer Zugentlastung (30) für das Anschlusskabel (28) des Sensors (17) versehen ist.

7. Messrolle nach Anspruch 6,
**dadurch gekennzeichnet,**
**dass** die Zugentlastung (30) durch einen an einer Umfangswand (32) des Stützkörpers (16) angeordneten formelastischen Ring (31) gebildet ist, der das Anschlusskabel (28) gegen die Umfangswand des Stützkörpers klemmt.

8. Messrolle nach Anspruch 1,
**dadurch gekennzeichnet,**
**dass** der Stützkörper (39, 51) längs verschiebbar in der Aufnahmebohrung (43, 60) aufgenommen ist, und der Stützkörper (39, 51) eine Komponente der Vorspanneinrichtung (47, 62) bildet, die formschlüssig in der Aufnahmebohrung (43, 60) aufgenommen ist.

9. Messrolle nach Anspruch 8,
**dadurch gekennzeichnet,**
**dass** der Stützkörper (51) zur Ausbildung der Vorspanneinrichtung (62) als ein in die Aufnahmebohrung (60) eingreifender Eingriffskörper mit radialen Verriegelungszapfen (59) ausgebildet ist, die zur Ausbildung eines Bajonettverschlusses in Verriegelungsnuten (54) eingreifen, welche in der Bohrungswand der Aufnahmebohrung (60) ausgebildet sind.

10. Messrolle nach Anspruch 9,
**dadurch gekennzeichnet,**
**dass** der Stützkörper (51) integral mit dem Sensor (38) ausgebildet ist.

11. Messrolle nach Anspruch 8,
**dadurch gekennzeichnet,**
**dass** der Stützkörper (39) zur Ausbildung der Vorspanneinrichtung (47) als ein in die Aufnahmebohrung (43) eingreifenden Eingriffskörper mit axial sich erstreckenden, elastischen Verriegelungsschenkeln (40) ausgebildet ist, die zur Ausbildung einer Rastverbindung mit in der Bohrungswand der Aufnahmebohrung (43) ausgebildeten Rastaufnahmen zusammenwirken.

12. Messrolle nach einem der vorangehenden Ansprüche,
**dadurch gekennzeichnet,**
**dass** zur Ausbildung des in der Aufnahmebohrung angeordneten Kontaktbodens (15) die Aufnahmebohrung als Sacklochbohrung ausgeführt ist.

13. Messrolle nach einem der Ansprüche 1 bis 11,
**dadurch gekennzeichnet,**
**dass** zur Ausbildung des in der Aufnahmebohrung (13, 43, 60) angeordneten Kontaktbodens (15) am radial äußeren Bohrungsende ein Bodenelement angeordnet ist.

## Claims

1. A measuring roller (10) for measuring belt tension, comprising a hollow shaft having a radial mounting bore (13, 43, 60) formed in a shaft sleeve for mounting at least one sensor assembly (14, 33, 36, 37) comprising a sensor (17, 38) and for mounting a contact bottom (15) arranged in the mounting bore at an outer shaft circumference,
**characterized in that**
the mounting bore is designed as a through bore in the hollow shaft and the sensor assembly arranged in the mounting bore comprises in addition to the sensor a support body (16, 39, 51) for supporting the sensor in the mounting bore and a pre-tensioning device (19, 34, 47, 62) for connecting the sensor to the shaft in a force-fitting manner in such a manner that the sensor is arranged between the contact bottom and the supporting body by its axial ends (23, 24).

2. The measuring roller according to claim 1,
**characterized in that**
the support body (16) is mounted in the mounting bore (13) in a longitudinally displaceable manner, and the pre-tensioning device (19, 34) is realized as an axial positioning device acting on the support body and formed independently from the support body for axially displacing the support body in the mounting bore.

3. The measuring roller according to claim 2,
**characterized in that**
for forming the pre-tensioning device (19, 34), the mounting bore (13) has an internal thread (22) and a pre-tensioning element (20, 57) provided with an external thread (21) and acting on the support body (16).

4. The measuring roller according to any one of the preceding claims,
**characterized in that**
the support body (16) is provided with an anti-rotation device (56).

5. The measuring roller according to claim 4,
**characterized in that**
a guiding groove (27) formed in a bore wall (18) of the mounting bore (13) for guiding a guiding pin (29) of the support body (16) simultaneously serves as a bushing for a connection cable (28) of the sensor (17).

6. The measuring roller according to claim 5,
**characterized in that**
the support body (16) is provided with a strain relief device (30) for the connection cable (28) of the sensor (17).

7. The measuring roller according to claim 6,
**characterized in that**
the strain relief device (30) is formed by a dimensionally elastic ring (31) arranged on a circumferential wall (32) of the support body (16) and clamping the connection cable (28) against the circumferential wall of the support body.

8. The measuring roller according to claim 1,
**characterized in that**
the support body (39, 51) is mounted in the mounting bore (43, 60) in a longitudinally displaceable manner, and the support body (39, 51) forms a component of the pre-tensioning device (47, 62) mounted in a form-fitting manner in the mounting bore (43, 60).

9. The measuring roller according to claim 8,
**characterized in that**
for forming the pre-tensioning device (62), the support body (51) is realized as an engaging body engaging into the mounting bore (60) and having radial locking pins (59) engaging into locking grooves (54) formed in the bore wall of the mounting bore (60) so as to form a bayonet lock.

10. The measuring roller according to claim 9,
**characterized in that**
the support body (51) is formed integrally with the sensor (38).

11. The measuring roller according to claim 8,
**characterized in that**
for forming the pre-tensioning device (47), the support body (39) is realized as an engaging body engaging into the mounting bore (43) and having axially extending elastic locking limbs (40) cooperating with snap-lock recesses formed in the bore wall of the mounting bore (43) so as to form a snap-lock connection.

12. The measuring roller according to any one of the preceding claims,
**characterized in that**
the mounting bore is realized as a blind bore to form the contact bottom (15) arranged in the mounting bore.

13. The measuring roller according to any one of claims 1 to 11,
**characterized in that**
a bottom element is arranged at the radially outward bore end to form the contact bottom (15) arranged in the mounting bore (13, 43, 60).

## Revendications

1. Rouleau (10) de mesure pour mesurer la traction de bande ayant un arbre creux ayant un trou (13, 43, 60) de montage radial formé dans un manchon d'arbre pour monter au moins un ensemble (14, 33, 36, 37) de capteur comprenant un capteur (17, 38) et pour monter un fond (15) de contact disposé dans le trou de montage à la circonférence d'arbre extérieure,
**caractérisé en ce que**
le trou de montage est formé en tant que trou traversant dans l'arbre creux et, en plus du capteur, l'ensemble de capteur disposé dans le trou de montage comprend un corps (16, 39, 51) de support pour supporter le capteur dans le trou de montage et un dispositif (19, 34, 47, 62) de précontrainte pour relier par force le capteur à l'arbre de telle manière que le capteur est disposé entre le fond de contact et le corps de support par ses extrémités (23, 24) axiaux.

2. Rouleau de mesure selon la revendication 1,
**caractérisé en ce que**
le corps (16) de support est monté dans le trou (13) de montage de manière d'être déplaçable longitudinalement, et le dispositif (19, 34) de précontrainte est réalisé en tant que dispositif de positionnement axial agissant sur le corps de support et réalisé indépendamment du corps de support pour déplacer axialement le corps de support dans le trou de montage.

3. Rouleau de mesure selon la revendication 2,
**caractérisé en ce que**
pour réaliser le dispositif (19, 34) de précontrainte, le trou (13) de montage comprend un filetage (22) intérieur et un élément (20, 57) de précontrainte pourvu d'un filetage (21) extérieur et agissant sur le corps (16) de support.

4. Rouleau de mesure selon l'une quelconque des revendications,
**caractérisé en ce que**
le corps (16) de support est pourvu d'un dispositif (56) anti-rotation.

5. Rouleau de mesure selon la revendication 4,
**caractérisé en ce qu'**
une rainure (27) de guide, qui est réalisé à guider une goupille (29) de guide du corps (16) de support dans un paroi (18) de trou du trou (13) de montage, sert simultanément à passer un fil (28) de connexion du capteur (17).

6. Rouleau de mesure selon la revendication 5,
**caractérisé en ce que**
le corps (16) de support est pourvu d'un décharge (30) de traction pour le fil (28) de connexion du capteur (17).

7. Rouleau de mesure selon la revendication 6,
**caractérisé en ce que**
le décharge (30) de traction est formé par une bague (31) flexible de forme disposée à un paroi (32) de circonférence du corps (16) de support, ladite bague (31) pinçant le fil (28) de connexion contre le paroi de circonférence du corps de support.

8. Rouleau de mesure selon la revendication 1,
**caractérisé en ce que**
le corps (39, 51) de support est monté dans le trou (43, 60) de montage de manière déplaçable longitudinalement, et le corps (39, 51) de support forme un composant du dispositif (47, 62) de précontrainte qui est monté dans le trou (43, 60) de montage par liaison de forme.

9. Rouleau de mesure selon la revendication 8,
**caractérisé en ce que**
pour former le dispositif (62) de précontrainte, le corps (51) de support est formé en tant que corps engageant, qui engage dans le trou (60) de montage et comprend des goupilles (59) de verrouillage radiales engageant dans des rainures (54) de verrouillage pour former une fermeture de baïonnette et formant dans le paroi de trou du trou (60) de montage.

10. Rouleau de mesure selon la revendication 9,
**caractérisé en ce que**
le corps (51) de support est formé d'un seul tenant avec le capteur (38).

11. Rouleau de mesure selon la revendication 8,
**caractérisé en ce que**
pour former le dispositif (47) de précontrainte, le corps (39) de support est formé en tant que corps engageant, qui engage dans le trou (43) de montage et comprend des jambes (40) de verrouillage élastique qui s'étendent axialement et interagissent avec des évidements d'encliquetage formés dans le paroi de trou du trou (43) de montage pour réaliser une connexion d'encliquetage.

12. Rouleau de mesure selon l'une quelconque des revendications précédentes,
**caractérisé en ce que**
le trou de montage est réalisé en tant que perçage à trou borgne pour réaliser le fond (15) de contact disposé dans le trou de montage.

13. Rouleau selon l'une quelconque des revendications 1 à 11,
**caractérisé en ce qu'**
un élément de fond est disposé à l'extrémité de trou radial extérieur pour former le fond (15) de contact disposé dans le trou (13, 43, 60) de montage.
